# EUROPEAN PATENT SPECIFICATION

(11) **EP 4 278 852 B1**
(45) Date of publication and mention of the grant of the patent: **18.12.2024**
(21) Application number: 22700898.4
(22) Date of filing: 10.01.2022
(51) Int. Cl.: H04W 76/28, H04W 28/02, H04W 76/14

(54) **METHOD, DEVICES AND PRODUCT FOR SIDELINK CONFIGURATION AND OPERATION**
VERFAHREN, VORRICHTUNG UND PRODUKT FÜR SIDELINK-KONFIGURATION UND -BETRIEB
PROCÉDÉ, DISPOSITIF ET PRODUIT DE CONFIGURATION ET DE FONCTIONNEMENT DE LIAISON LATÉRALE

(30) Priority: 13.01.2021 WO PCT/CN2021/071586
(43) Date of publication of application: 22.11.2023
(73) Proprietor: Telefonaktiebolaget LM Ericsson (publ), 164 83 Stockholm (SE)
(72) Inventor: ZHANG, Zhang, Beijing 100102 (CN); WANG, Min, 977 53 Luleå (SE)
(74) Representative: Ericsson
(86) International application number: PCT/EP2022/050302
(87) International publication number: WO 2022/152635

(56) References cited:
- LG ELECTRONICS: "Discussion on physical layer design considering sidelink DRX operation", vol. RAN WG1, no. E-Meeting; 20201026 - 20201113, 24 October 2020 (2020-10-24), XP051946545, Retrieved from the Internet <URL:https://ftp.3gpp.org/tsg_ran/WG1_RL1/TSGR1_103-e/Docs/R1-2007897.zip R1-2007897 Discussion on physical layer design considering sidelink DRX operation_LGE.docx> [retrieved on 20201024]
- HUAWEI ET AL: "Discussion on measurement related requirements for NR V2X", vol. RAN WG4, no. Online Meeting ;20200420 - 20200430, 10 April 2020 (2020-04-10), XP051872832, Retrieved from the Internet <URL:https://ftp.3gpp.org/tsg_ran/WG4_Radio/TSGR4_94_eBis/Docs/R4-2004316.zip R4-2004316.docx> [retrieved on 20200410]
- HUAWEI ET AL: "Sidelink resource allocation to reduce power consumption", vol. RAN WG1, no. E-meeting; 20201026 - 20201113, 24 October 2020 (2020-10-24), XP051946440, Retrieved from the Internet <URL:https://ftp.3gpp.org/tsg_ran/WG1_RL1/TSGR1_103-e/Docs/R1-2007615.zip R1-2007615.docx> [retrieved on 20201024]
- MODERATOR (OPPO): "FL summary for AI 8.11.2.1 - resource allocation for power saving", vol. RAN WG1, no. e-Meeting; 20201026 - 20201113, 17 November 2020 (2020-11-17), XP051955617, Retrieved from the Internet <URL:https://ftp.3gpp.org/tsg_ran/WG1_RL1/TSGR1_103-e/Docs/R1-2009584.zip R1-2009584 FL summary for power saving RA_final.docx> [retrieved on 20201117]

## Description

### TECHNICAL FIELD

The present disclosure generally relates to the field of sidelink configuration and operation, and more particularly to a method, to a device and to a product for sidelink discontinuous reception configuration and operation.

### BACKGROUND

This section introduces aspects that may facilitate better understanding of the present disclosure. Accordingly, the statements of this section are to be read in this light and are not to be understood as admissions about what is in the prior art or what is not in the prior art.

For 5G NR (5^{th} generation new radio), when being configured, the discontinuous reception (DRX) functionality controls the expected user equipment (UE) behavior in terms of reception and processing of transmissions. Broadly speaking, the DRX functionality defines the notion of Active Time (also referred to as Active Time state or ACTIVE state), in which the UE is expected to receive and process incoming transmissions as appropriate. For example, the UE is expected to decode the downlink (DL) control channels, and process grants, etc.

3GPP specified the LTE (long term evolution) D2D (device-to-device) technology, also known as sidelink (SL) or the PC5 interface, as part of Release 12 (Rel-12). The target use case (UC) was the Proximity Services (communication and discovery). Support was enhanced during Rel-13. In Rel-14, the LTE sidelink was extensively redesigned to support vehicular communications (commonly referred to as V2X or V2V). Support was again enhanced during Rel-15. From the point of view of the lowest radio layers, the LTE SL uses broadcast communication. That is, transmission from a UE targets any receiver that is in range.

ProSe (Proximity Services) in the Release 12 and 13 of LTE. Later in Rel. 14 and 15, LTE V2X related enhancements targeting the specific characteristics of vehicular communications were specified. In LTE V2X only broadcast is supported over sidelink.

In Rel-16, 3GPP introduced the sidelink for the 5G new radio (NR). The driving UC were vehicular communications with more stringent requirements than those typically served using the LTE SL. To meet these requirements, the NR SL is capable of broadcast, groupcast, and unicast communications. In groupcast communication, the intended receivers of a message are typically a subset of the vehicles near the transmitter, whereas in unicast communication, there is a single intended receiver.

Both the LTE SL and the NR SL can operate with and without network coverage and with varying degrees of interaction between the UEs (user equipment) and the NW (network), including support for standalone, network-less operation.

3GPP contribution "Discussion on physical layer design considering sidelink DRX operation", document R1-2007897, 3GPP TSG RAN WG1 meeting #103-e (November 2020), describes congestion control under SL DRX, which may be performed using channel busy ratio measured during the past active time duration.

### SUMMARY

The present invention provides a method according to claim 1, a first terminal device according to claim 13, and a computer program according to claim 15. The dependent embodiments define further embodiments.

In the context of the present invention and its embodiments, the present disclosure provides mechanisms to adapt sidelink discontinuous reception (SL DRX) configuration based on the sidelink (SL) radio situation and to operate SL DRX by taking SL resource configuration into account, which mainly includes the following aspects:
- The SL active time is adapted based on the SL radio situation.
- The SL radio situation could be estimated by the UE itself or informed by the peer UE.
- The radio situation based SL DRX configuration adaptation may only be performed when there are GBR (guaranteed bit rate) PC5 bearers configured.
- The SL DRX timers representing SL active time such as drx-onDurationTimer, drx-InactivityTimer and drx-RetransmissionTimer are only started and running when they should be started and running according to the DRX configuration and during the SL subframes/slots in which SL communication is allowed.

With the methods and devices of the present disclosure, radio situation based SL DRX configuration adaptation achieves a more optimal tradeoff between UE power consumption and SL performance. Operating SL DRX by taking SL resource configuration into account avoids that the SL communication opportunities are undesirably reduced due to mismatch between SL DRX configuration and SL resource configuration.

### BRIEF DESCRIPTION OF THE DRAWINGS

The present disclosure may be best understood by way of example with reference to the following description and accompanying drawings that are used to illustrate embodiments of the present disclosure. In the drawings:
Fig. 1 is a flow chart illustrating a method implemented on a first terminal device according to some embodiments of the present disclosure;
Fig. 2 is a flow chart illustrating a method implemented on a second terminal device according to some embodiments of the present disclosure;
Fig. 3 is a flow chart illustrating a method implemented on a third terminal device according to some embodiments of the present disclosure;
Fig. 4 is a flow chart illustrating a method implemented on a control node according to some embodiments of the present disclosure;
Fig. 5 is a block diagram illustrating a first terminal device according to some embodiments of the present disclosure;
Fig. 6 is another block diagram illustrating a first terminal device according to some embodiments of the present disclosure;
Fig. 7 is a block diagram illustrating a second terminal device according to some embodiments of the present disclosure;
Fig. 8 is another block diagram illustrating a second terminal device according to some embodiments of the present disclosure;
Fig. 9 is a block diagram illustrating a third terminal device according to some embodiments of the present disclosure;
Fig. 10 is another block diagram illustrating a third terminal device according to some embodiments of the present disclosure;
Fig. 11 is a block diagram illustrating a control node according to some embodiments of the present disclosure;
Fig. 12 is another block diagram illustrating a control node according to some embodiments of the present disclosure;
Fig. 13 is a block diagram illustrating a wireless communication system according to some embodiments of the present disclosure;
Fig. 14 is a block diagram illustrating a wireless communication system according to some embodiments of the present disclosure;
Fig. 15 is a block diagram schematically illustrating a telecommunication network connected via an intermediate network to a host computer;
Fig. 16 is a generalized block diagram of a host computer communicating via a base station with a user equipment over a partially wireless connection; and
Figs. 17 to 20 are flowcharts illustrating methods implemented in a communication system including a host computer, a base station and a user equipment.

### DETAILED DESCRIPTION

The following detailed description describes methods and devices for sidelink discontinuous reception configuration and operation. In the following detailed description, numerous specific details such as logic implementations, types and interrelationships of system components, etc. are set forth in order to provide a more thorough understanding of the present disclosure. It should be appreciated, however, by one skilled in the art that the present disclosure may be practiced without such specific details. In other instances, control structures, circuits and instruction sequences have not been shown in detail in order not to obscure the present disclosure. Those of ordinary skill in the art, with the included descriptions, will be able to implement appropriate functionality without undue experimentation.

References in the specification to "one embodiment", "an embodiment", "an example embodiment" etc. indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

Bracketed text and blocks with dashed borders (e.g., large dashes, small dashes, dot-dash, and dots) may be used herein to illustrate optional operations that add additional features to embodiments of the present disclosure. However, such notation should not be taken to mean that these are the only options or optional operations, and/or that blocks with solid borders are not optional in certain embodiments of the present disclosure.

In the following detailed description and claims, the terms "coupled" and "connected," along with their derivatives, may be used. It should be understood that these terms are not intended as synonyms for each other. "Coupled" is used to indicate that two or more elements, which may or may not be in direct physical or electrical contact with each other, cooperate or interact with each other. "Connected" is used to indicate the establishment of communication between two or more elements that are coupled with each other.

An electronic device stores and transmits (internally and/or with other electronic devices over a network) code (which is composed of software instructions and which is sometimes referred to as computer program code or a computer program) and/or data using machine-readable media (also called computer-readable media), such as machine-readable storage media (e.g., magnetic disks, optical disks, read only memory (ROM), flash memory devices, phase change memory) and machine-readable transmission media (also called a carrier) (e.g., electrical, optical, radio, acoustical or other forms of propagated signals - such as carrier waves, infrared signals). Thus, an electronic device (e.g., a computer) includes hardware and software, such as a set of one or more processors coupled to one or more machine-readable storage media to store code for execution on the set of processors and/or to store data. For instance, an electronic device may include non-volatile memory containing the code since the non-volatile memory can persist code/data even when the electronic device is turned off (when power is removed), and while the electronic device is turned on, that part of the code that is to be executed by the processor(s) of that electronic device is typically copied from the slower non-volatile memory into volatile memory (e.g., dynamic random access memory (DRAM), static random access memory (SRAM)) of that electronic device. Typical electronic devices also include a set of one or more physical network interfaces to establish network connections (to transmit and/or receive code and/or data using propagating signals) with other electronic devices. One or more parts of an embodiment of the present disclosure may be implemented using different combinations of software, firmware, and/or hardware.

The terms "terminal device" and "user equipment (UE)" are used in this disclosure as interchangeable terms.

A control node can be a base station (for example a NB, eNB or gNB), or a controlling UE/terminal device. The claimed invention is part of the embodiments of the Group A. *Discontinuous reception (DRX)*

For 5G NR, when being configured, the DRX functionality controls the expected UE behavior in terms of reception and processing of transmissions. Broadly speaking, the DRX functionality defines the notion of Active Time (also referred to as Active Time state or ACTIVE state), in which the UE is expected to receive and process incoming transmissions as appropriate. For example, the UE is expected to decode DL control channels, and process grants, etc.

It should be noted that the state of the DRX is not related to the radio resource control (RRC) state of the UE. That is, even if the UE is in the ACTIVE or INACTIVE state, its RRC state is not changed (i.e., the UE stays in its current RRC state - RRC_CONNECTED/IDLE/INACTIVE).

When the UE is not in Active Time, there is no expectation on the UE receiving and processing transmissions. That is, the base station (BS) cannot assume that the UE will be listening to DL transmissions. The DRX configuration defines the transitions between states.

Typically, UEs that are not in Active Time turn off some of their components and enter a low-power (i.e., sleeping) mode. To ensure that the UE switches regularly to Active Time (i.e., wakes up), a DRX cycle is defined. This DRX cycle is controlled by two parameters:
- The periodicity of the DRX cycle, which controls how frequently the UE switches to Active Time.
- The duration of the Active Time, which controls for how long the UE is in active state.

In addition to this basic cycle, the DRX procedures also define other conditions that may allow the UE to switch between Active Time and Inactive Time. For example, if a UE is expecting a retransmission from the gNB, the UE may enter Inactive Time (i.e., while the gNB prepares the retransmission) and then may enter Active Time (i.e., during a window in which the gNB may send the transmission).

It should be noted that the Active Time due to the DRX cycle is determined by the DRX configuration. In other words, it is easy to predict when the UE will be in Active Time for the DRX cycle (unless the UE is explicitly commanded to leave Active Time). In contrast, it is not easy to predict whether a UE is in Active Time due to other timers because their start/stop depends on the traffic of packets.

The DRX procedures are described in TS 38.321 as follows.

The MAC (medium access control) entity may be configured by RRC with a DRX functionality that controls the UE's PDCCH (physical downlink control channel) monitoring activity for the MAC entity's C-RNTI, CS-RNTI, INT-RNTI, SFI-RNTI, SP-CSI-RNTI, TPC-PUCCH-RNTI, TPC-PUSCH-RNTI, and TPC-SRS-RNTI. When using DRX operation, the MAC entity shall also monitor PDCCH according to requirements found in other clauses of this specification. When in RRC_CONNECTED, if DRX is configured, for all the activated Serving Cells, the MAC entity may monitor the PDCCH discontinuously using the DRX operation specified in this clause; otherwise the MAC entity shall monitor the PDCCH as specified in TS 38.213.

RRC controls DRX operation by configuring the following parameters:
- *drx-onDurationTimer:* the duration at the beginning of a DRX Cycle;
- *drx-SlotOffset:* the delay before starting the *drx-onDurationTimer*;
- *drx-InactivityTimer:* the duration after the PDCCH occasion in which a PDCCH indicates a new UL (uplink) or DL transmission for the MAC entity;
- *drx-RetransmissionTimerDL* (per DL HARQ (hybrid automatic repeat request) process except for the broadcast process): the maximum duration until a DL retransmission is received;
- *drx-RetransmissionTimerUL* (per UL HARQ process): the maximum duration until a grant for UL retransmission is received;
- *drx-LongCycleStartOffset*: the Long DRX cycle and *drx-StartOffset* which defines the subframe where the Long and Short DRX Cycle starts;
- *drx-ShortCycle* (optional): the Short DRX cycle;
- *drx-ShortCycleTimer* (optional): the duration the UE shall follow the Short DRX cycle;
- *drx-HARQ-RTT-TimerDL* (per DL HARQ process except for the broadcast process): the minimum duration before a DL assignment for HARQ retransmission is expected by the MAC entity;
- *drx-HARQ-RTT-TimerUL* (per UL HARQ process): the minimum duration before a UL HARQ retransmission grant is expected by the MAC entity.

When a DRX cycle is configured, the Active Time includes the time while:
- *drx-onDurationTimer* or *drx-InactivityTimer* or *drx-RetransmissionTimerDL* or *drx-RetransmissionTimerUL* or *ra-ContentionResolutionTimer* (as described in clause 5.1.5) is running; or
- a Scheduling Request is sent on PUCCH (physical uplink control channel) and is pending (as described in clause 5.4.4); or
- a PDCCH indicating a new transmission addressed to the C-RNTI of the MAC entity has not been received after successful reception of a Random Access Response for the Random Access Preamble not selected by the MAC entity among the contention-based Random Access Preamble (as described in clause 5.1.4).

When DRX is configured, the MAC entity shall:
1>if a MAC PDU is received in a configured downlink assignment:
   2> start the *drx-HARQ-RTT-TimerDL* for the corresponding HARQ process in the first symbol after the end of the corresponding transmission carrying the DL HARQ feedback;
   2> stop the *drx-RetransmissionTimerDL* for the corresponding HARQ process.
1>if a MAC PDU is transmitted in a configured uplink grant:
   2> start the *drx-HARQ-RTT-TimerUL* for the corresponding HARQ process in the first symbol after the end of the first repetition of the corresponding PUSCH transmission;
   2> stop the *drx-RetransmissionTimerUL* for the corresponding HARQ process.
1>if a *drx-HARQ-RTT-TimerDL* expires:
   2>ifthe data of the corresponding HARQ process was not successfully decoded:
   3> start the *drx-RetransmissionTimerDL* for the corresponding HARQ process in the first symbol after the expiry of *drx-HARQ-RTT-TimerDL.*
1>if a *drx-HARQ-RTT-TimerUL* expires:
   2> start the *drx-RetransmissionTimerUL* for the corresponding HARQ process in the first symbol after the expiry of *drx-HARQ-RTT-TimerUL.*
1>if a DRX Command MAC CE (control element) or a Long DRX Command MAC CE is received:
   2> stop *drx*-*onDurationTimer*;
   2> stop *drx-InactivityTimer.*
1>if *drx-InactivityTimer* expires or a DRX Command MAC CE is received:
   2>if the Short DRX cycle is configured:
      3> start or restart *drx-ShortCycleTimer* in the first symbol after the expiry of *drx-InactivityTimer* or in the first symbol after the end of DRX Command MAC CE reception;
      3>use the Short DRX Cycle.
   2> else:
      3>use the Long DRX cycle.
1>if *drx-ShortCycleTimer* expires:
   2>use the Long DRX cycle.
1>if a Long DRX Command MAC CE is received:
   2> stop *drx-ShortCycleTimer;*
   2>use the Long DRX cycle.
1>if the Short DRX Cycle is used, and [(SFN × 10) + subframe number] modulo (*drx-ShortCycle*) = (*drx-StartOffset*) modulo (*drx-ShortCycle*); or
1>if the Long DRX Cycle is used, and [(SFN × 10) + subframe number] modulo (*drx-LongCycle)* = *drx-StartOffset:*
   2> start *drx*-*onDurationTimer* after *drx-SlotOffset* from the beginning of the subframe.
1>if the MAC entity is in Active Time:
   2>monitor the PDCCH as specified in TS 38.213;
   2>ifthe PDCCH indicates a DL transmission:
      3> start the *drx-HARQ-RTT-TimerDL* for the corresponding HARQ process in the first symbol after the end of the corresponding transmission carrying the DL HARQ feedback;
      3> stop the *drx-RetransmissionTimerDL* for the corresponding HARQ process.
   2>ifthe PDCCH indicates a UL transmission:
      3> start the *drx-HARQ-RTT-TimerUL* for the corresponding HARQ process in the first symbol after the end of the first repetition of the corresponding PUSCH transmission;
      3> stop the *drx-RetransmissionTimerUL* for the corresponding HARQ process.
   2> if the PDCCH indicates a new transmission (DL or UL):
      3> start or restart *drx-InactivityTimer* in the first symbol after the end of the PDCCH reception.
1>in current symbol n, if the MAC entity would not be in Active Time considering grants/assignments/DRX Command MAC CE/Long DRX Command MAC CE received and Scheduling Request sent until 4 ms prior to symbol n when evaluating all DRX Active Time conditions as specified in this clause:
   2>not transmit periodic SRS and semi-persistent SRS defined in TS 38.214;
   2>not report CSI on PUCCH and semi-persistent CSI configured on PUSCH.
1>if CSI masking (*csi-Mask*) is setup by upper layers:
   2>in current symbol n, if *drx-onDurationTimer* would not be running considering grants/assignments/DRX Command MAC CE/Long DRX Command MAC CE received until 4 ms prior to symbol n when evaluating all DRX Active Time conditions as specified in this clause:
   3>not report CSI on PUCCH.

It should be noted that if a UE multiplexes a CSI configured on PUCCH with other overlapping uplink control information(s) (UCI(s)) according to the procedure specified in TS 38.213 subclause 9.2.5 and this CSI multiplexed with other UCI(s) would be reported on a PUCCH resource outside DRX Active Time, it is up to UE implementation whether to report this CSI multiplexed with other UCI(s).

Regardless of whether the MAC entity is monitoring PDCCH or not, the MAC entity transmits HARQ feedback, aperiodic CSI on PUSCH, and aperiodic SRS defined in TS 38.214 when such is expected.

The MAC entity need not to monitor the PDCCH if it is not a complete PDCCH occasion (e.g. the Active Time starts or ends in the middle of a PDCCH occasion).

### Sidelink

In the upcoming Rel-17, 3GPP will work on enhancements for the NR SL. The ambition is not only to improve the capabilities of NR SL for V2X but also to address other UCs such as National Security and Public Safety (NSPS) as well as commercial UCs such as Network Controled Interactive Services (NCIS). In the future, the NR SL may be enhanced further to also address other UCs.

In V2X, User Equipments (UEs) are typically mounted in a car and have no important power restrictions. In contrast, NSPS or NCIS mostly use handheld UEs, for which energy efficiency is a concern. With this in mind, the Rel.17 Work Item on NR sidelink enhancements (RP-193231) includes the study and specification of SL DRX mechanism as one of its objectives. This includes defining SL DRX configurations and the corresponding UE procedure, specifying mechanisms to align sidelink DRX configurations among the UEs communicating with each other, and specifying mechanisms to align sidelink DRX configurations with Uu DRX configurations for an in-coverage UE. in the recent RAN2 meeting, it was agreed that Uu alike DRX configuration is applied to SL for SL unicast communication. For SL broadcast and groupcast, whether to apply Uu alike DRX configuration still remains open.

### Resource Pool

Resource pools define physical resources in time and frequency that carry sidelink control and traffic data. In the frequency domain, the resources are divided into subchannels where each subchannel consists of a set of contiguous resource blocks in a subframe or slot and different subchannels do not overlap. The subchannel sizes are determined based on convenient sizes for the Fast Fourier Transform (FFT) implementation. In the time domain, the resource pool is defined by a repeating bitmap that maps sidelink resources to all subframes or slots excluding some special subframes, for example the subframes or slots used for sidelink synchronization signal (SLSS) and physical sidelink broadcast channel (PSBCH). In the bitmap, "1" indicates that the subframe or slot contains resources that could be used for sidelink communication, and "0" indicates that the subframe or slot does not contain resources that could be used for sidelink communication. The bitmap is designed so that it is repeated an integer number of times within the system frame number (SFN) or direct frame number (DFN) range.

A UE is preconfigured with a set of resource pools which are used for sidelink communication when the UE is out of the NW coverage. When in the NW coverage, the resource pool is configured by the gNB via dedicated or common control signaling.

UE energy saving is one important performance indicator. In the 3GPP Rel-17 WI on NR sidelink enhancement, the below objective on UE Sidelink energy saving has been agreed and will be studied during 3GPP Rel-17 time frame.

Sidelink DRX for broadcast, groupcast, and unicast [RAN2]
- Defines on- and off-durations in sidelink and specify the corresponding UE procedure;
- Specifies mechanism aiming to align sidelink DRX wake-up time among the UEs communicating with each other;
- Specifies mechanism aiming to align sidelink DRX wake-up time with Uu DRX wake-up time in an in-coverage UE.

In RAN2#112-e, RAN2 has made the below agreement regarding how to design timers for SL DRX.

As a baseline, for Sidelink DRX for SL unicast, it is proposed to inherit and use timers similar to what are used in Uu DRX. Sidelink DRX for SL broadcast/groupcast is open and under investigation and discussion. Detailed timers are open and under investigation and discussion.

According to the above agreement, a SL DRX configuration will contain similar timers as in Uu DRX to regulate the UE's active time. In Uu DRX, the timers are configured with semi-static absolute time values such as in number of ms, or number of slots. The UE is in active time when one of the timers such as *drx-onDurationTimer* or *drx-InactivityTime* is running.

SL DRX configuration will contain similar timers. However, a simple reusage of the above Uu rule (i.e., the timers are set to semi-static absolute time values) to handle the timers for SL DRX may not work.

On one hand, SL transmissions support a distributed s allocation mode compared to Uu, i.e., Mode 2 resource allocation. In other words, UE selects SL resources for a transmission autonomously. In this way, the UE may detect collision while selecting resources. In case of occurrence of high congestion in a resource pool, the UE may not be able to find free resources during an active time period.

On the other hand, SL transmissions are limited to SL resource pools, i.e., UE is allowed to perform SL transmissions or receptions within specified SL resource pools. A UE may not be allowed to perform SL transmissions or receptions while a SL drx-onDuration timer is running since there are no SL resources available during the period, e.g., there is no SL slot allocated during the period.

Therefore, it is necessary to develop corresponding solutions for SL DRX.

The present disclosure is described in the context of NR SL communications. However, most of the embodiments are in general applicable to any type of direct communications between UEs involving device-to-device (D2D) communications such as LTE SL. Embodiments are described from a TX (transmitter) UE and RX (receiver) UE point of view. Further, it is assumed that an SL UE and its serving gNB operate with the same radio access technology (RAT) e.g., NR, LTE, and so on. However, all the embodiments apply without loss of meaning to any combination of RATs between the SL UE and its serving gNB.

In the present disclosure, an SL DRX configuration denotes a set of parameters which determines the DRX behavior of a UE in SL communication, similar to the Uu DRX configuration. SL DRX parameters are not detailed in the present disclosure.

### Group A embodiments - SL DRX adapting to congestion

In this group, various embodiments are described on how to adapt SL DRX configuration according to measured SL congestion in terms of metrics which may include at least one of the following, e.g.:
- channel busy ratio (CBR)
- channel usage ratio (CR)
- reference signal receiving power (RSRP)
- reference signal receiving quality (RSRQ)
- received signal strength indication (RSSI)
- signal to interference plus noise ratio (SINR)
- signal to interference ratio (SIR)
- hybrid automatic repeat request negative acknowledgement (HARQ NACK) ratio
- average number of retransmissions of a HARQ transport block (TB)
- packet delay
- packet loss ratio
- packet error rate
- achieved bit rate of a flow/application/service/traffic type.

According to the present invention, a UE is configured to extend its DRX active time when measured SL congestion is increasing. The UE is configured to reduce its DRX active time when the measured SL congestion is decreasing. The active time could be increased/deceased by adjusting any one or more SL DRX parameters which may affect UE's active time such as for example:
- drx-onDurationTimer
- drx-InactivityTimer
- drx-LongCycleStartOffset
- drx-ShortCycle
- drx-ShortCycleTimer.

It should be noted that as an example we use the above parameters to stand for possible parameters for SL DRX. The embodiments are not limited to the examples. The names of actual parameters for SL DRX may be different. The number of parameters for SL DRX could also be different.

In the claimed invention, for an SL DRX configuration of the UE, when the measured SL congestion is above a certain level (e.g., a first configured threshold), the UE applies a secondary DRX cycle (e.g., short DRX cycle) during each existing DRX cycle (e.g., long DRX cycle) to extend its active time; and vice versa, when the measured SL congestion is below another certain level (e.g., a second configured threshold, which may be lower than the first configured threshold), the UE disables the secondary DRX cycle.

In the claimed invention, for an SL DRX configuration of the UE, when the measured SL congestion is above a certain level (e.g., a first configured threshold), the UE applies a secondary timer (e.g., second-OnDurationTimer or second-Inactivitytimer) during each existing DRX cycle (e.g., long DRX cycle) to extend its active time; and vice versa, when the measured SL congestion is below another certain level (e.g., a second configured threshold, which may be lower than the first configured threshold), the UE disables the secondary timer to reduce its active time.

In another embodiment, two UEs involved in SL unicast communication coordinate the SL DRX configuration adaptation via one of the following ways:
- One of the two UEs (e.g., denoted UE1) adapts the SL DRX configuration and informs the peer UE (e.g., denoted UE2) using either a new signaling or an existing signaling for PC5 access stratum (AS) layer reconfiguration. UE2 either accepts or rejects the adaptation and sends back a response. If the adaptation is rejected, an old SL DRX configuration will continue to be used.
- One of the two UEs (e.g., denoted UE1) sends some assistance info to the peer UE (e.g., UE2). UE2 may adapt the SL DRX configuration by taking the received assistance info into account. If the SL DRX configuration is adapted, UE2 informs back the adapted SL DRX configuration. UE1 should follow the new SL DRX configuration, or optionally it has an authority to accept or reject the new SL DRX configuration and in that case it sends its decision to UE2. The assistance info may include one or more of the following:
   an expected active time ratio (i.e. the ratio of the time that the UE is in active);
   the measured SL congestion (in terms of one or more metrics defined in the first embodiment).

The assistance info may be an absolute value or a degree of change compared to the value in the last sent assistance info.

In the above procedure, either a whole SL DRX configuration or only the SL DRX parameter(s) that are changed may be informed to the peer UE.

In another embodiment, multiple SL DRX configurations and/or multiple values for certain SL DRX parameters such as drx-onDurationTimer and/or drx-InactivityTimer etc. are (pre)configured. The UE could only select one of the SL DRX configurations and/or one of the values for the SL DRX parameters when adapting the SL DRX configuration. Each of the multiple SL DRX configurations and/or the multiple values for the SL DRX parameters may be associated with an index, and the UE only informs the index of the selected configuration and/or the selected parameter value to the peer UE when adapting the SL DRX configuration.

In another embodiment, the SL DRX configuration adaptation is only performed when there are GBR PC5 bearers configured between the two UEs.

In another embodiment, the SL DRX configuration could only be adapted once every *m* ms, where *m* is preconfigured or configured by the NW via dedicated or common signaling.

In another embodiment, the SL DRX parameters such as drx-onDurationTimer and/or drx-InactivityTimer, etc., could only be increased or decreased at most *j*% in every *k* ms, where *j* and *k* are preconfigured or configured by the NW via dedicated or common signaling.

In another embodiment, multiple *m's, j's* and *k's* are (pre)configured. Smaller *m* and/or smaller *k* and/or larger *j* are adopted when there are GBR PC5 bearers configured between the two UEs; otherwise, larger *m* and/or larger *k* and/or smaller *j* are adopted.

### Group B embodiments - SL DRX operation considering SL resource configuration

In another embodiment, the SL DRX timers such as drx-onDurationTimer, drx-InactivityTimer and drx-RetransmissionTimer, etc., are only started and running when they should be started and running according to the DRX configuration and during the SL subframes/slots in which SL communication is allowed. For example:
- if Short DRX cycle is in use, and [(SFN × 10) + subframe number] modulo (drx-ShortCycle) = (drx-StartOffset) modulo (drx-ShortCycle), or if the Long DRX cycle is in use, and [(SFN × 10) + subframe number] modulo (drx-LongCycle) = drx-StartOffset:
   start drx-onDurationTimer in e.g. the first SL slot which is at least after drx-SlotOffset from the beginning of the subframe.
- If a drx-HARQ-RTT-Timer expires:
   start the drx-RetransmissionTimer for the corresponding HARQ process in e.g. the first symbol in the SL slot after the expiry of drx-HARQ-RTT-Timer.
- drx-onDurationTimer, drx-InactivityTimer and/or drx-RetransmissionTimer are paused during non-SL subframes/slots and resumed during SL subframes/slots.

A UE is only in an SL active state when the timers such as drx-onDurationTimer, drx-InactivityTimer and/or drx-RetransmissionTimer, etc., have been started and are not paused/expired/stopped.

In another embodiment, the SL DRX timers are counted in number of logical frames/slots/ms/ofdm (orthogonal frequency divisional multiplexing) symbols. Logical frames/slots/ms/ofdm symbols may be subset of all physical frames/slots/ms/ofdm symbols. They may be determined/positioned in time according to the SL resource configuration (e.g., the configuration is associated with one or more specific resource pools). As soon as the timer is started, the timer value may be only changed after each logical frame/slot/ms/ofdm symbol has elapsed. A UE may only be in the SL active state when in SL frames/slots and the timers such as drx-onDurationTimer, drx-InactivityTimer and drx-RetransmissionTimer, etc., have been started and are not expired/stopped.

With such an SL DRX operation, SL DRX could be configured independently of SL resource configuration, i.e. multiple resource pools could share the same SL DRX configuration. This can save signaling consumption as there is no need to coordinate SL DRX configuration when the resource pool is reconfigured.

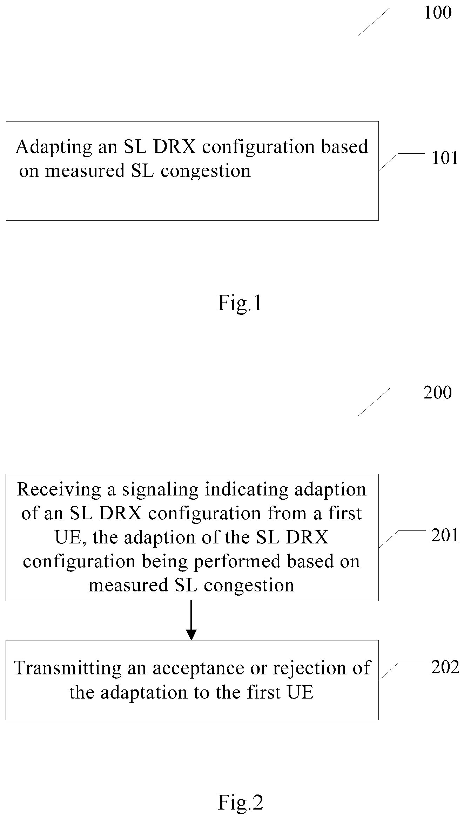

Fig. 1 is a flow chart illustrating a method 500 implemented on a first terminal device according to some embodiments of the present disclosure. As an example, operations of this flow chart may be performed by a first UE which may perform adaptation of an SL DRX configuration (the above Group A), but they are not limited thereto. The operations in this and other flow charts will be described with reference to the exemplary embodiments of the other figures. However, it should be appreciated that the operations of the flow charts may be performed by embodiments of the present disclosure other than those discussed with reference to the other figures, and the embodiments of the present disclosure discussed with reference to these other figures may perform operations different than those discussed with reference to the flow charts.

In one embodiment, the first UE may adapt an SL DRX configuration based on measured SL congestion (block 101). The measured SL congestion may be measured in a resource pool.

As an example, the SL congestion may be measured in terms of metrics including at least one of:
channel busy ratio;
channel usage ratio;
reference signal receiving power;
reference signal receiving quality;
received signal strength indication;
signal to interference plus noise ratio;
signal to interference ratio;
hybrid automatic repeat request, HARQ, negative acknowledgement;
average number of retransmissions of a HARQ transport block;
packet delay;
packet loss ratio;
packet error rate; and
achieved bit rate of a traffic type.

The SL DRX configuration is adapted by:
extending active time of the first UE when the measured SL congestion is increasing; and
reducing the active time of the first UE when the measured SL congestion is decreasing.

The active time may be extended or reduced by adjusting SL DRX parameters for the SL DRX configuration.

The SL DRX parameters may include at least one of:
drx-onDurationTimer;
drx-InactivityTimer;
drx-LongCycleStartOffset;
drx-ShortCycle; and
drx-ShortCycleTimer.

In a variant, the active time may be extended by applying a secondary DRX cycle during each existing DRX cycle when the measured SL congestion is above a first configured threshold, and the active time may be reduced by disabling the secondary DRX cycle when the measured SL congestion is below a second configured threshold.

As a further example, the active time may be extended by applying a secondary timer during each existing DRX cycle when the measured SL congestion is above a first configured threshold, and the active time may be reduced by disabling the secondary timer when the measured SL congestion is below a second configured threshold.

As an example, the method 100 may further comprise:
transmitting, to a second UE, a signaling indicating the adaptation of the SL DRX configuration; and
receiving an acceptance or rejection of the adaptation from the second UE.

As a further example, the method 100 may further comprise:
using a previous SL DRX configuration when the rejection of the adaptation is received.

As a further example, the method 100 may further comprise:
receiving assistance information about the SL DRX configuration from the second UE prior to transmitting the signaling.

As a further example, the assistance information may include at least one of:
an expected active time ratio; and
the measured SL congestion.

As a further example, the assistance information may be an absolute value or a degree of change as compared to a value of immediately previously received assistance information.

As a further example, the signaling may comprise a whole SL DRX configuration or may comprise only one or more changed SL DRX parameters for the SL DRX configuration.

As an example, the method 100 may further comprise:
when adapting a plurality of SL DRX configurations, selecting one of the SL DRX configurations and/or one of values of SL DRX parameters for the SL DRX configurations.

As a further example, the signaling may comprise an index associated with each of the plurality of SL DRX configurations and/or the values of the SL DRX parameters for the SL DRX configurations.

As an example, the SL DRX configuration may be adapted only when GBR PC5 bearers are configured between the first UE and a second UE.

As an example, the SL DRX configuration may be adapted according to a first configured interval.

As a further example, the SL DRX parameters for the SL DRX configuration may be adjusted within a configured percent according a second configured interval.

As a further example, when the GBR PC5 bearers are configured between the first UE and a second UE, the first interval and/or the second interval may be configured as smaller values and the percent is configured as a larger value, and when the GBR PC5 bearers are not configured between the first UE and a second UE, the first interval and/or the second interval may be configured as larger values and the percent may be configured as a smaller value.

As an example, parameters for the adaptation of the SL DRX configuration may be configured by a control node or preconfigured.

As a further example, the control node may be a gNB, or a controlling UE, or a combination of the gNB and the controlling UE.

Furthermore, the present disclosure provides a first terminal device which is adapted to perform the method 100.

Fig. 2 is a flow chart illustrating a method 200 implemented on a second terminal device according to some embodiments of the present disclosure. As an example, operations of this flow chart may be performed by a second UE which may be informed by the first UE of the SL DRX configuration.

In one embodiment, the second UE may receive a signaling indicating adaption of an SL DRX configuration from a first UE, the adaption of the SL DRX configuration being performed based on measured SL congestion (block 201). The second UE may transmit an acceptance or rejection of the adaptation to the first UE (block 202).

As an example, the method 200 may further comprise:
transmitting assistance information about the SL DRX configuration to the first UE prior to receiving the signaling.

As a further example, the assistance information may include at least one of:
an expected active time ratio; and
the measured SL congestion.

As a further example, the assistance information may be an absolute value or a degree of change as compared to a value of immediately previously transmitted assistance information.

As an example, the signaling may comprise a whole SL DRX configuration or may comprise only one or more changed SL DRX parameters for the SL DRX configuration.

As an example, the signaling may comprise an index associated each of a plurality of adapted SL DRX configurations and/or the values of the SL DRX parameters for the adapted SL DRX configurations.

Furthermore, the present disclosure provides a second terminal device which is adapted to perform the method 200.

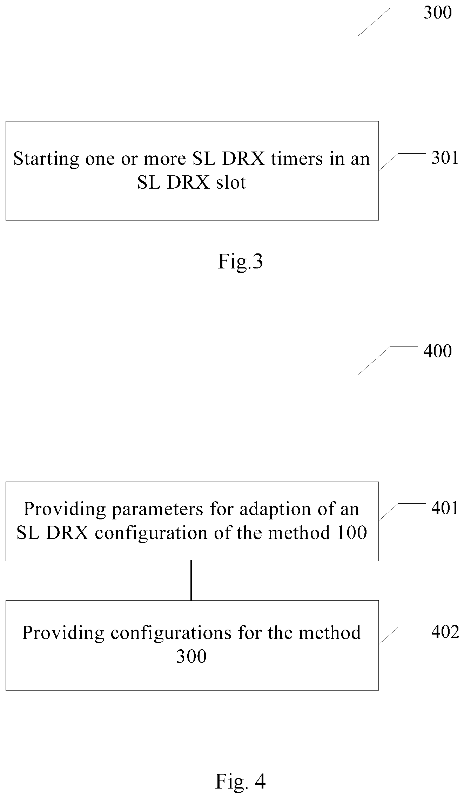

Fig. 3 is a flow chart illustrating a method 300 implemented on a third terminal device according to some embodiments of the present disclosure. As an example, operations of this flow chart may be performed by a third UE which may perform an SL DRX operation by considering the SL resource configuration (the above Group B).

In one embodiment, the third UE may start one or more SL DRX timers in an SL DRX slot (block 301).

As an example, the method 300 may further comprise:
pausing the one or more SL DRX timers during non-SL slots; and
resuming the one or more SL DRX timers during SL slots.

As a further example, the third UE may be in a DRX inactive state when the one or more SL DRX timers are paused.

As an example, the one or more SL DRX timers may be counted in number of logical slot symbols which are a subset of all physical slot symbols.

As a further example, the logical slot symbols may be positioned in time based on an SL resource configuration.

As a further example, in the case that the one or more SL DRX timers are started, one or more values of the one or more SL DRX timers may be changed only after each of the logical slot symbols has elapsed.

As an example, configurations for the third UE may be signaled by a control node or preconfigured.

As a further example, the control node may be a gNB, or a controlling UE, or a combination of the gNB and the controlling UE.

Furthermore, the present disclosure provides a third terminal device which is adapted to perform the method 300.

Fig. 4 is a flow chart illustrating a method 400 implemented on a control node according to some embodiments of the present disclosure. As an example, operations of this flow chart may be performed by a control node which may provide configurations for at least the method 100 of Fig. 1 and the method 300 of Fig. 3.

In one embodiment, the control node may provide parameters for adaption of an SL DRX configuration of the method 100 (block 401), or provide configurations for the method 300 (block 402).

As an example, the parameters may include a first configured threshold and a second configured threshold. As a further example, active time of a UE may be extended when measured SL congestion is above the first configured threshold, and the active time may be reduced when the measured SL congestion is below the second configured threshold.

As an example, the parameters may include:
a first configured interval, according to which the SL DRX configuration is adapted.

As an example, the parameters may include a second configured interval and a configured percent. As a further example, SL DRX parameters for the SL DRX configuration may be adjusted within the configured percent according the second configured interval.

As an example, the provided configurations may include an SL resource configuration.

As an example, the control node may be a gNB, or a controlling UE, or a combination of the gNB and the controlling UE.

Furthermore, the present disclosure provides a control node which is adapted to perform the method 400.

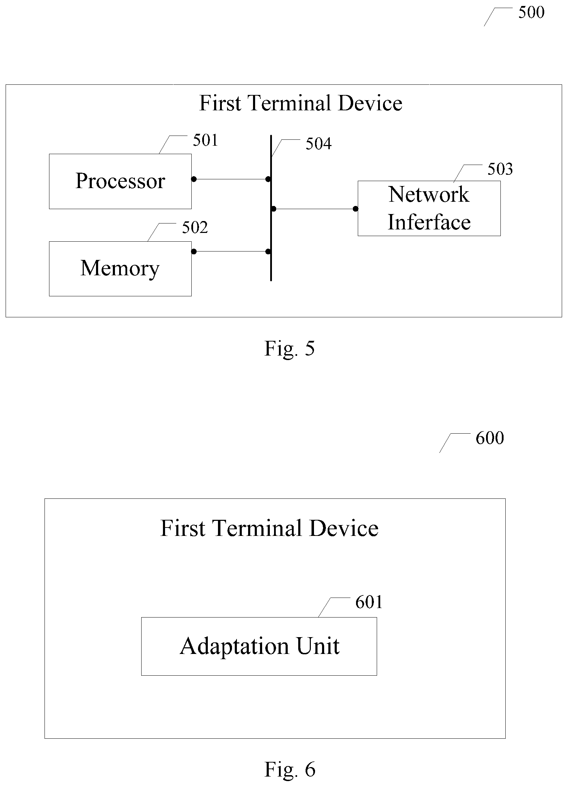

Fig. 5 is a block diagram illustrating a first terminal device 500 according to some embodiments of the present disclosure. As an example, the first terminal device 500 may act as a first UE which may perform adaptation of an SL DRX configuration (the above Group A), but it is not limited thereto. It should be appreciated that the first terminal device 500 may be implemented using components other than those illustrated in Fig. 5.

With reference to Fig. 5, the first terminal device 800 may comprise at least a processor 501, a memory 502, a network interface 503 and a communication medium 504. The processor 501, the memory 502 and the network interface 503 may be communicatively coupled to each other via the communication medium 504.

The processor 501 may include one or more processing units. A processing unit may be a physical device or article of manufacture comprising one or more integrated circuits that read data and instructions from computer readable media, such as the memory 502, and selectively execute the instructions. In various embodiments, the processor 501 may be implemented in various ways. As an example, the processor 501 may be implemented as one or more processing cores. As another example, the processor 501 may comprise one or more separate microprocessors. In yet another example, the processor 501 may comprise an application-specific integrated circuit (ASIC) that provides specific functionality. In still another example, the processor 501 may provide specific functionality by using an ASIC and/or by executing computer-executable instructions.

The memory 502 may include one or more computer-usable or computer-readable storage medium capable of storing data and/or computer-executable instructions. It should be appreciated that the storage medium is preferably a non-transitory storage medium.

The network interface 503 may be a device or article of manufacture that enables the first terminal device 500 to send data to or receive data from other devices. In different embodiments, the network interface 503 may be implemented in different ways. As an example, the network interface 503 may be implemented as an Ethernet interface, a token-ring network interface, a fiber optic network interface, a network interface (e.g., Wi-Fi, WiMax, etc.), or another type of network interface.

The communication medium 504 may facilitate communication among the processor 501, the memory 502 and the network interface 503. The communication medium 504 may be implemented in various ways. For example, the communication medium 504 may comprise a Peripheral Component Interconnect (PCI) bus, a PCI Express bus, an accelerated graphics port (AGP) bus, a serial Advanced Technology Attachment (ATA) interconnect, a parallel ATA interconnect, a Fiber Channel interconnect, a USB bus, a Small Computing System Interface (SCSI) interface, or another type of communications medium.

In the example of Fig. 5, the instructions stored in the memory 502 may include those that, when executed by the processor 501, cause the first terminal device 500 to implement the method described with respect to Fig. 1.

Fig. 6 is another block diagram illustrating a first terminal device 600 according to some embodiments of the present disclosure. As an example, the first terminal device 900 may act as a first UE which may perform adaptation of an SL DRX configuration (the above Group A), but it is not limited thereto. It should be appreciated that the first terminal device 600 may be implemented using components other than those illustrated in Fig. 6.

With reference to Fig. 6, the first terminal device 600 may comprise at least an adaptation unit 601. The adaptation unit 601 may be adapted to perform at least the operation described in the block 101 of Fig. 1.

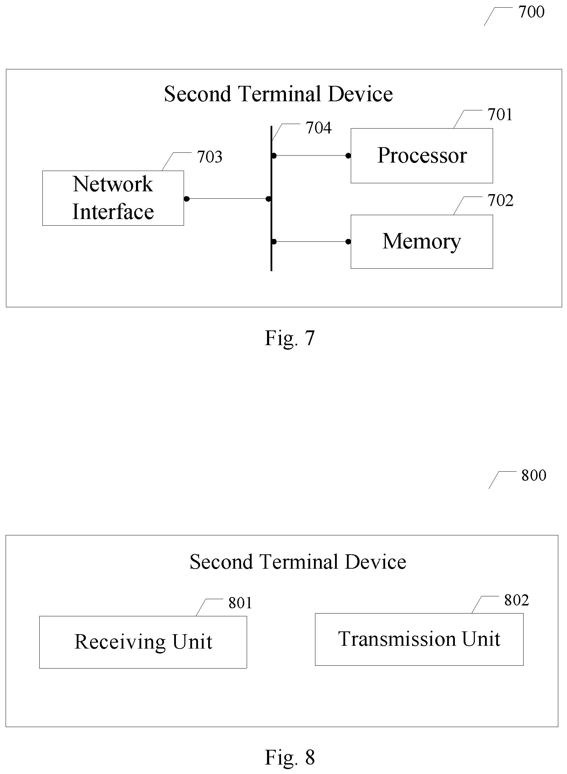

Fig. 7 is a block diagram illustrating a second terminal device 700 according to some embodiments of the present disclosure. As an example, the second terminal device 700 may act as a second UE which may be informed by the first UE of the SL DRX configuration, but it is not limited thereto. It should be appreciated that the second terminal device 700 may be implemented using components other than those illustrated in Fig. 7.

With reference to Fig. 7, the second terminal device 700 may comprise at least a processor 701, a memory 702, a network interface 703 and a communication medium 704. The processor 701, the memory 702 and the network interface 703 are communicatively coupled to each other via the communication medium 704.

The processor 701, the memory 702, the network interface 703 and the communication medium 704 are structurally similar to the processor 501, the memory 502, the network interface 503 and the communication medium 504 respectively, and will not be described herein in detail.

In the example of Fig. 7, the instructions stored in the memory 702 may include those that, when executed by the processor 701, cause the second terminal device 700 to implement the method described with respect to Fig. 2.

Fig. 8 is another block diagram illustrating a second terminal device 800 according to some embodiments of the present disclosure. As an example, the second terminal device 800 may act as a second UE which may be informed by the first UE of the SL DRX configuration, but it is not limited thereto. It should be appreciated that the second terminal device 800 may be implemented using components other than those illustrated in Fig. 8.

With reference to Fig. 8, the second terminal device 800 may comprise at least a receiving unit 801 and a transmission unit 802. The receiving unit 801 may be adapted to perform at least the operation described in the block 201 of Fig. 2. The transmission unit 802 may be adapted to perform at least the operation described in the block 202 of Fig. 2.

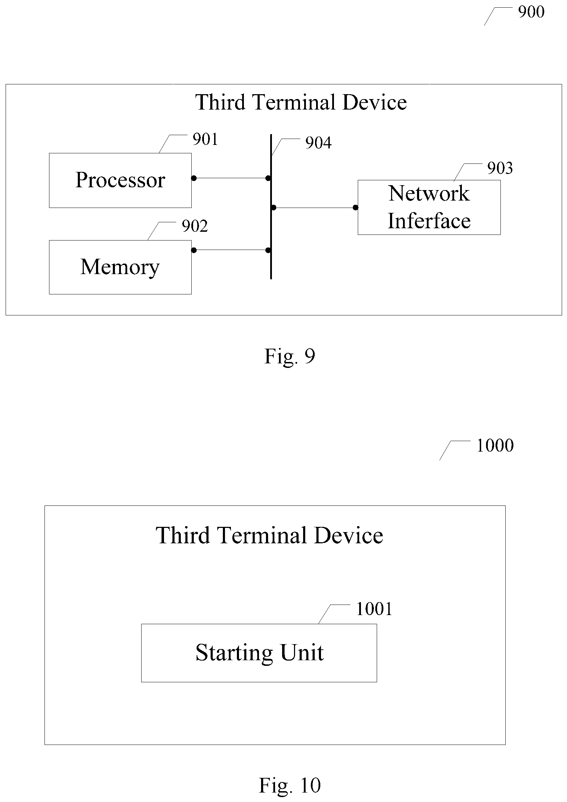

Fig. 9 is a block diagram illustrating a third terminal device 900 according to some embodiments of the present disclosure. As an example, the third terminal device 900 may act as a third UE which may perform an SL DRX operation by considering the SL resource configuration (the above Group B), but it is not limited thereto. It should be appreciated that the third terminal device 900 may be implemented using components other than those illustrated in Fig. 9.

With reference to Fig. 9, the third terminal device 900 may comprise at least a processor 901, a memory 902, a network interface 903 and a communication medium 904. The processor 901, the memory 902 and the network interface 903 are communicatively coupled to each other via the communication medium 904.

The processor 901, the memory 902, the network interface 903 and the communication medium 904 are structurally similar to the processor 501 or 701, the memory 502 or 702, the network interface 503 or 703 and the communication medium 504 or 704 respectively, and will not be described herein in detail.

In the example of Fig. 9, the instructions stored in the memory 902 may include those that, when executed by the processor 901, cause the third terminal device 900 to implement the method described with respect to Fig. 3.

Fig. 10 is another block diagram illustrating a third terminal device 1300 according to some embodiments of the present disclosure. As an example, the third terminal device 1000 may act as a third UE which may perform an SL DRX operation by considering the SL resource configuration (the above Group B), but it is not limited thereto. It should be appreciated that the third terminal device 1000 may be implemented using components other than those illustrated in Fig. 10.

With reference to Fig. 10, the third terminal device 1000 may comprise at least a starting unit 1001. The starting unit 1001 may be adapted to perform at least the operation described in the block 301 of Fig. 3.

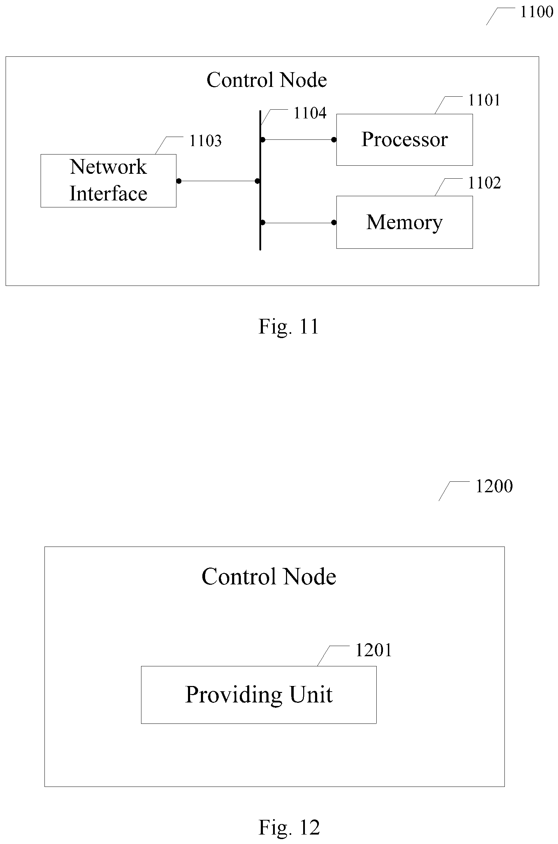

Fig. 11 is a block diagram illustrating a control node 1100 according to some embodiments of the present disclosure. As an example, the control node 1100 may provide configurations for at least the method 100 of Fig. 1 and the method 300 of Fig. 3, but it is not limited thereto. It should be appreciated that the control node 1100 may be implemented using components other than those illustrated in Fig. 11.

With reference to Fig. 11, the control node 1100 may comprise at least a processor 1101, a memory 1102, a network interface 1103 and a communication medium 1104. The processor 1101, the memory 1102 and the network interface 1103 are communicatively coupled to each other via the communication medium 1104.

The processor 1101, the memory 1102, the network interface 1103 and the communication medium 1104 are structurally similar to the processor 501, 701 or 901, the memory 502, 702 or 902, the network interface 503, 703 or 903 and the communication medium 504, 704 or 904 respectively, and will not be described herein in detail.

In the example of Fig. 11, the instructions stored in the memory 1102 may include those that, when executed by the processor 1101, cause the control node 1100 to implement the method described with respect to Fig. 4.

Fig. 12 is another block diagram illustrating a control node 1200 according to some embodiments of the present disclosure. As an example, the control node 1200 may provide configurations for at least the method 100 of Fig. 1 and the method 300 of Fig. 3, but it is not limited thereto. It should be appreciated that the control node 1200 may be implemented using components other than those illustrated in Fig. 12.

With reference to Fig. 12, the control node 1200 may comprise at least a providing unit 1201. The providing unit 1201 may be adapted to perform at least the operations described in the blocks 401 and 402 of Fig. 4.

The units shown in Figs. 6, 8, 10 and 12 may constitute machine-executable instructions embodied within a machine, e.g., readable medium, which when executed by a machine will cause the machine to perform the operations described. Besides, any of these units may be implemented as hardware, such as an application specific integrated circuit (ASIC), Digital Signal Processor (DSP), Field Programmable Gate Array (FPGA) or the like.

Moreover, it should be appreciated that the arrangements described herein are set forth only as examples. Other arrangements (e.g., more controllers or more detectors, etc.) may be used in addition to or instead of those shown, and some units may be omitted altogether. Functionality and cooperation of these units are correspondingly described in more detail with reference to Figs. 1-4.

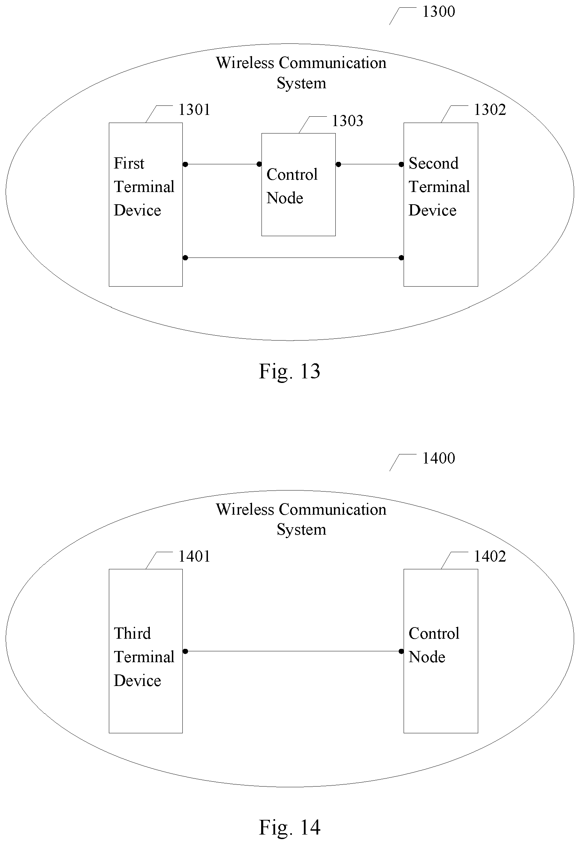

Fig. 13 is a block diagram illustrating a wireless communication system 1300 according to some embodiments of the present disclosure. The wireless communication system 1300 comprises at least a first terminal device 1301, a second terminal device 1302 and a control node 1303. In one embodiment, the first terminal device 1301 may act as the first terminal device 500 or 600 as depicted in Fig. 5 or 6, the second terminal device 1302 may act as the second terminal device 700 or 800 as depicted in Fig. 7 or 8, and the control node 1303 may act as the control node 1100 or 1200 as depicted in Fig. 11 or 12. In one embodiment, the first terminal device 1301, the second terminal device 1302 and the control node 1303 may communicate with each other.

Fig. 14 is a block diagram illustrating a wireless communication system 1400 according to some embodiments of the present disclosure. The wireless communication system 1400 comprises at least a third terminal device 1401 and a control node 1402. In one embodiment, the third terminal device 1401 may act as the third terminal device 900 or 1000 as depicted in Fig. 9 or 10, and the control node 1402 may act as the control node 1100 or 1200 as depicted in Fig. 11 or 12. In one embodiment, the third terminal device 1401 and the control node 1402 may communicate with each other.

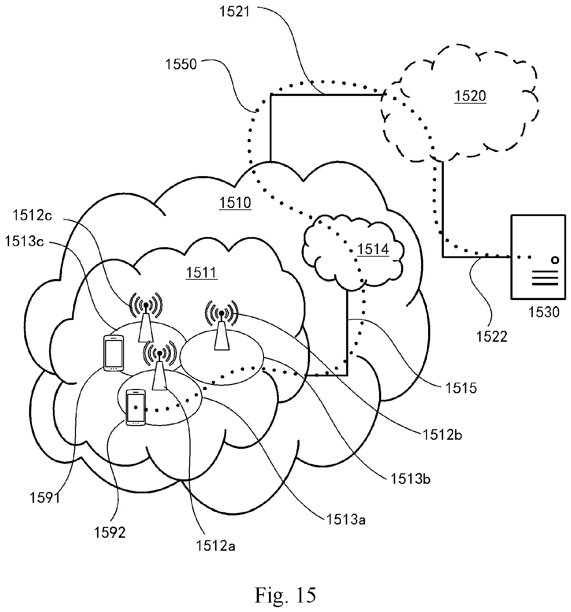

Fig. 15 is a block diagram schematically illustrating a telecommunication network connected via an intermediate network to a host computer.

With reference to Fig. 15, in accordance with an embodiment, a communication system includes a telecommunication network 1510, such as a 3GPP-type cellular network, which comprises an access network 1511, such as a radio access network, and a core network 1514. The access network 1511 comprises a plurality of base stations 1512a, 1512b, 1512c, such as NBs, eNBs, gNBs or other types of wireless access points, each defining a corresponding coverage area 1513a, 1513b, 1513c. Base stations 1512a, 1512b, 1512c can be control nodes, such as control nodes 1100, 1200 and 1402 of Figures 11, 12 and 14. Each base station 1512a, 1512b, 1512c is connectable to the core network 1514 over a wired or wireless connection 1515. A first user equipment (UE) 1591 located in coverage area 1513c is configured to wirelessly connect to, or be paged by, the corresponding base station 1512c. A second UE 1592 in coverage area 1513a is wirelessly connectable to the corresponding base station 1512a. UEs 1591, 1592 can be terminal devices, such as terminal devices 500, 600, 700, 800, 900, 1000, 1301, 1302 and 1401 of Figures 5 to 10, 13 and 14. While a plurality of UEs 1591, 1592 are illustrated in this example, the disclosed embodiments are equally applicable to a situation where a sole UE is in the coverage area or where a sole UE is connecting to the corresponding base station 1512.

The telecommunication network 1510 is itself connected to a host computer 1530, which may be embodied in the hardware and/or software of a standalone server, a cloud-implemented server, a distributed server or as processing resources in a server farm. The host computer 1530 may be under the ownership or control of a service provider, or may be operated by the service provider or on behalf of the service provider. The connections 1521, 1522 between the telecommunication network 1510 and the host computer 1530 may extend directly from the core network 1514 to the host computer 1530 or may go via an optional intermediate network 1520. The intermediate network 1520 may be one of, or a combination of more than one of, a public, private or hosted network; the intermediate network 1520, if any, may be a backbone network or the Internet; in particular, the intermediate network 1520 may comprise two or more sub-networks (not shown).

The communication system of Fig. 15 as a whole enables connectivity between one of the connected UEs 1591, 1592 and the host computer 1530. The connectivity may be described as an over-the-top (OTT) connection 1550. The host computer 1530 and the connected UEs 1591, 1592 are configured to communicate data and/or signaling via the OTT connection 1550, using the access network 1511, the core network 1514, any intermediate network 1520 and possible further infrastructure (not shown) as intermediaries. The OTT connection 1550 may be transparent in the sense that the participating communication devices through which the OTT connection 1550 passes are unaware of routing of uplink and downlink communications. For example, a base station 1512 may not or need not be informed about the past routing of an incoming downlink communication with data originating from a host computer 1530 to be forwarded (e.g., handed over) to a connected UE 1591. Similarly, the base station 1512 need not be aware of the future routing of an outgoing uplink communication originating from the UE 1591 towards the host computer 1530.

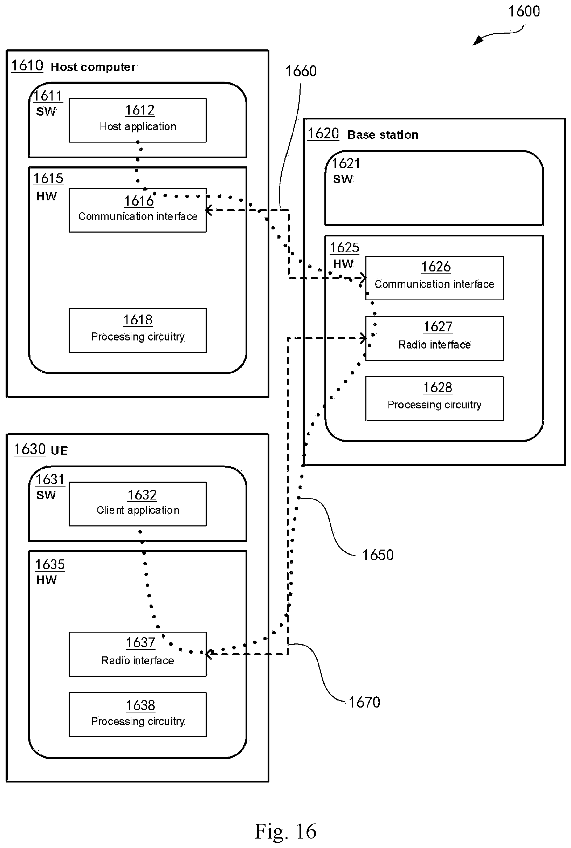

Example implementations, in accordance with an embodiment, of the UE, base station and host computer discussed in the preceding paragraphs will now be described with reference to Fig. 16. In a communication system 1600, a host computer 1610 comprises hardware 1615 including a communication interface 1616 configured to set up and maintain a wired or wireless connection with an interface of a different communication device of the communication system 1600. The host computer 1610 further comprises processing circuitry 1618, which may have storage and/or processing capabilities. In particular, the processing circuitry 1618 may comprise one or more programmable processors, application-specific integrated circuits, field programmable gate arrays or combinations of these (not shown) adapted to execute instructions. The host computer 1610 further comprises software 1611, which is stored in or accessible by the host computer 1610 and executable by the processing circuitry 1618. The software 1611 includes a host application 1612. The host application 1612 may be operable to provide a service to a remote user, such as a UE 1630 connecting via an OTT connection 1650 terminating at the UE 1630 and the host computer 1610. In providing the service to the remote user, the host application 1612 may provide user data which is transmitted using the OTT connection 1650.

The communication system 1600 further includes a base station 1620 provided in a telecommunication system and comprising hardware 1625 enabling it to communicate with the host computer 1610 and with the UE 1630. The hardware 1625 may include a communication interface 1626 for setting up and maintaining a wired or wireless connection with an interface of a different communication device of the communication system 1600, as well as a radio interface 1627 for setting up and maintaining at least a wireless connection 1670 with a UE 1630 located in a coverage area (not shown in Fig. 16) served by the base station 1620. The communication interface 1626 may be configured to facilitate a connection 1660 to the host computer 1610. The connection 1660 may be direct or it may pass through a core network (not shown in Fig. 16) of the telecommunication system and/or through one or more intermediate networks outside the telecommunication system. In the embodiment shown, the hardware 1625 of the base station 1620 further includes processing circuitry 1628, which may comprise one or more programmable processors, application-specific integrated circuits, field programmable gate arrays or combinations of these (not shown) adapted to execute instructions. The base station 1620 further has software 1621 stored internally or accessible via an external connection.

The communication system 1600 further includes the UE 1630 already referred to. Its hardware 1635 may include a radio interface 1637 configured to set up and maintain a wireless connection 1670 with a base station serving a coverage area in which the UE 1630 is currently located. The hardware 1635 of the UE 1630 further includes processing circuitry 1638, which may comprise one or more programmable processors, application-specific integrated circuits, field programmable gate arrays or combinations of these (not shown) adapted to execute instructions. The UE 1630 further comprises software 1631, which is stored in or accessible by the UE 1630 and executable by the processing circuitry 1638. The software 1631 includes a client application 1632. The client application 1632 may be operable to provide a service to a human or non-human user via the UE 1630, with the support of the host computer 1610. In the host computer 1610, an executing host application 1612 may communicate with the executing client application 1632 via the OTT connection 1650 terminating at the UE 1630 and the host computer 1610. In providing the service to the user, the client application 1632 may receive request data from the host application 1612 and provide user data in response to the request data. The OTT connection 1650 may transfer both the request data and the user data. The client application 1632 may interact with the user to generate the user data that it provides.

It is noted that the host computer 1610, base station 1620 and UE 1630 illustrated in Fig. 16 may be identical to the host computer 1530, one of the base stations 1512a, 1512b, 1512c and one of the UEs 1591, 1592 of Fig. 15, respectively. This is to say, the inner workings of these entities may be as shown in Fig. 16 and independently, the surrounding network topology may be that of Fig. 15.

In Fig. 16, the OTT connection 1650 has been drawn abstractly to illustrate the communication between the host computer 1610 and the use equipment 1630 via the base station 1620, without explicit reference to any intermediary devices and the precise routing of messages via these devices. Network infrastructure may determine the routing, which it may be configured to hide from the UE 1630 or from the service provider operating the host computer 1610, or both. While the OTT connection 1650 is active, the network infrastructure may further take decisions by which it dynamically changes the routing (e.g., on the basis of load balancing consideration or reconfiguration of the network).

The wireless connection 1670 between the UE 1630 and the base station 1620 is in accordance with the teachings of the embodiments described throughout this disclosure. One or more of the various embodiments improve the performance of OTT services provided to the UE 1630 using the OTT connection 1650, in which the wireless connection 1670 forms the last segment. More precisely, the teachings of these embodiments may improve the radio resource utilization and thereby provide benefits such as reduced user waiting time.

A measurement procedure may be provided for the purpose of monitoring data rate, latency and other factors on which the one or more embodiments improve. There may further be an optional network functionality for reconfiguring the OTT connection 1650 between the host computer 1610 and UE 1630, in response to variations in the measurement results. The measurement procedure and/or the network functionality for reconfiguring the OTT connection 1650 may be implemented in the software 1611 of the host computer 1610 or in the software 1631 of the UE 1630, or both. In embodiments, sensors (not shown) may be deployed in or in association with communication devices through which the OTT connection 1650 passes; the sensors may participate in the measurement procedure by supplying values of the monitored quantities exemplified above, or supplying values of other physical quantities from which software 1611, 1631 may compute or estimate the monitored quantities. The reconfiguring of the OTT connection 1650 may include message format, retransmission settings, preferred routing etc.; the reconfiguring need not affect the base station 1620, and it may be unknown or imperceptible to the base station 1620. Such procedures and functionalities may be known and practiced in the art. In certain embodiments, measurements may involve proprietary UE signaling facilitating the host computer's 1610 measurements of throughput, propagation times, latency and the like. The measurements may be implemented in that the software 1611, 1631 causes messages to be transmitted, in particular empty or 'dummy' messages, using the OTT connection 1650 while it monitors propagation times, errors etc.

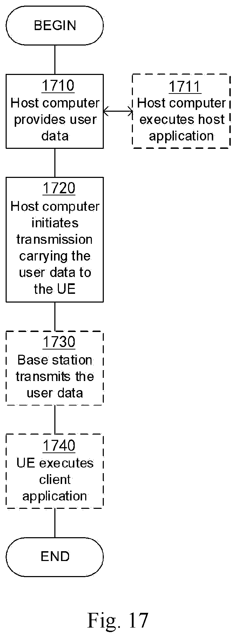

Fig. 17 is a flowchart illustrating a method implemented in a communication system, in accordance with one embodiment. The communication system includes a host computer, a base station and a UE which may be those described with reference to Figs. 15 and 16. For simplicity of the present disclosure, only drawing references to Fig. 17 will be included in this section. In a first step 1710 of the method, the host computer provides user data. In an optional substep 1711 of the first step 1710, the host computer provides the user data by executing a host application. In a second step 1720, the host computer initiates a transmission carrying the user data to the UE. In an optional third step 1730, the base station transmits to the UE the user data which was carried in the transmission that the host computer initiated, in accordance with the teachings of the embodiments described throughout this disclosure. In an optional fourth step 1740, the UE executes a client application associated with the host application executed by the host computer.

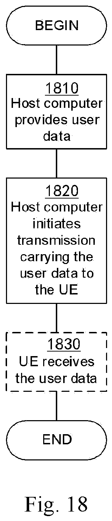

Fig. 18 is a flowchart illustrating a method implemented in a communication system, in accordance with one embodiment. The communication system includes a host computer, a base station and a UE which may be those described with reference to Fig. 15 and 16. For simplicity of the present disclosure, only drawing references to Fig. 18 will be included in this section. In a first step 1810 of the method, the host computer provides user data. In an optional substep (not shown) the host computer provides the user data by executing a host application. In a second step 1820, the host computer initiates a transmission carrying the user data to the UE. The transmission may pass via the base station, in accordance with the teachings of the embodiments described throughout this disclosure. In an optional third step 1830, the UE receives the user data carried in the transmission.

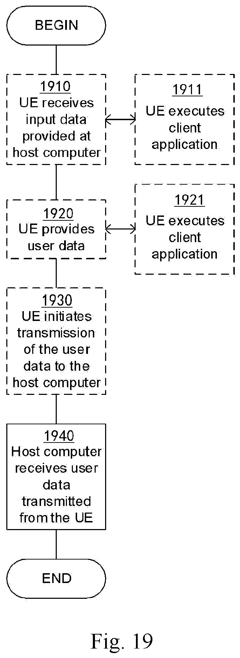

Fig. 19 is a flowchart illustrating a method implemented in a communication system, in accordance with one embodiment. The communication system includes a host computer, a base station and a UE which may be those described with reference to Figs. 15 and 16. For simplicity of the present disclosure, only drawing references to Fig. 19 will be included in this section. In an optional first step 1910 of the method, the UE receives input data provided by the host computer. Additionally or alternatively, in an optional second step 1920, the UE provides user data. In an optional substep 1921 of the second step 1920, the UE provides the user data by executing a client application. In a further optional substep 1911 of the first step 1910, the UE executes a client application which provides the user data in reaction to the received input data provided by the host computer. In providing the user data, the executed client application may further consider user input received from the user. Regardless of the specific manner in which the user data was provided, the UE initiates, in an optional third substep 1930, transmission of the user data to the host computer. In a fourth step 1940 of the method, the host computer receives the user data transmitted from the UE, in accordance with the teachings of the embodiments described throughout this disclosure.

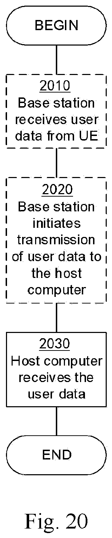

Fig. 20 is a flowchart illustrating a method implemented in a communication system, in accordance with one embodiment. The communication system includes a host computer, a base station and a UE which may be those described with reference to Figs. 15 and 16. For simplicity of the present disclosure, only drawing references to Fig. 20 will be included in this section. In an optional first step 2010 of the method, in accordance with the teachings of the embodiments described throughout this disclosure, the base station receives user data from the UE. In an optional second step 2020, the base station initiates transmission of the received user data to the host computer. In a third step 2030, the host computer receives the user data carried in the transmission initiated by the base station.

Some portions of the foregoing detailed description have been presented in terms of algorithms and symbolic representations of transactions on data bits within a computer memory. These algorithmic descriptions and representations are ways used by those skilled in the data processing arts to most effectively convey the substance of their work to others skilled in the art. An algorithm is here, and generally, conceived to be a self-consistent sequence of transactions leading to a desired result. The transactions are those requiring physical manipulations of physical quantities. Usually, though not necessarily, these quantities take the form of electrical or magnetic signals capable of being stored, transferred, combined, compared, and otherwise manipulated. It has proven convenient at times, principally for reasons of common usage, to refer to these signals as bits, values, elements, symbols, characters, terms, numbers, or the like.

It should be appreciated, however, that all of these and similar terms are to be associated with the appropriate physical quantities and are merely convenient labels applied to these quantities. Unless specifically stated otherwise as apparent from the above discussion, it is appreciated that throughout the description, discussions utilizing terms such as "processing" or "computing" or "calculating" or "determining" or "displaying" or the like, refer to actions and processes of a computer system, or a similar electronic computing device, that manipulates and transforms data represented as physical (electronic) quantities within the computer system's registers and memories into other data similarly represented as physical quantities within the computer system memories or registers or other such information storage, transmission or display devices.

The algorithms and displays presented herein are not inherently related to any particular computer or other apparatus. Various general-purpose systems may be used with programs in accordance with the teachings herein, or it may prove convenient to construct more specialized apparatus to perform the required method transactions. The required structure for a variety of these systems will appear from the description above. In addition, embodiments of the present disclosure are not described with reference to any particular programming language. It should be appreciated that a variety of programming languages may be used to implement the teachings of embodiments of the present disclosure as described herein.

An embodiment of the present disclosure may be an article of manufacture in which a non-transitory machine-readable medium (such as microelectronic memory) has stored thereon instructions (e.g., computer code) which program one or more data processing components (generically referred to here as a "processor") to perform the operations described above. In other embodiments, some of these operations might be performed by specific hardware components that contain hardwired logic (e.g., dedicated digital filter blocks and state machines). Those operations might alternatively be performed by any combination of programmed data processing components and fixed hardwired circuit components.

In the foregoing detailed description, embodiments of the present disclosure have been described with reference to specific exemplary embodiments thereof. It will be evident that various modifications may be made thereto without departing from the scope of the present disclosure as set forth in the following claims. The specification and drawings are, accordingly, to be regarded in an illustrative sense rather than a restrictive sense.

Throughout the description, some embodiments of the present disclosure have been presented through flow diagrams. It should be appreciated that the order of transactions and transactions described in these flow diagrams are only intended for illustrative purposes and not intended as a limitation of the present disclosure. One having ordinary skill in the art would recognize that variations can be made to the flow diagrams without departing from the present disclosure.

## Claims

1. A method (100) implemented by a first terminal device (500, 600, 1301), the method comprising:
adapting (101) a sidelink discontinuous reception, SL DRX, configuration based on measured sidelink, SL, congestion **characterised by**:
extending active time of the first terminal device (500, 600, 1301) when the measured SL congestion is increasing; and
reducing the active time of the first terminal device (500, 600, 1301) when the measured SL congestion is decreasing,
wherein the active time is extended by applying a secondary DRX cycle during each existing DRX cycle when the measured SL congestion is above a first configured threshold, and the active time is reduced by disabling the secondary DRX cycle when the measured SL congestion is below a second configured threshold, or
wherein the active time is extended by applying a secondary timer during each existing DRX cycle when the measured SL congestion is above a first configured threshold, and the active time is reduced by disabling the secondary timer when the measured SL congestion is below a second configured threshold.

2. The method of claim 1, wherein the measured SL congestion is measured in a resource pool.

3. The method of claim 1 or 2, wherein the SL congestion is measured in terms of metrics including at least one of:
packet delay;
packet loss ratio;
packet error rate;
achieved bit rate of a traffic type;
channel busy ratio;
channel usage ratio;
reference signal receiving power;
reference signal receiving quality;
received signal strength indication;
signal to interference plus noise ratio;
signal to interference ratio;
hybrid automatic repeat request, HARQ, negative acknowledgement; and
average number of retransmissions of a HARQ transport block.

4. The method of any of claims 1-3, wherein the active time is extended or reduced by adjusting SL DRX parameters for the SL DRX configuration.

5. The method of claim 4, wherein the SL DRX parameters includes at least one of:
drx-onDurationTimer;
drx-InactivityTimer;
drx-LongCycleStartOffset;
drx-ShortCycle; and
drx-ShortCycleTimer.

6. The method of any of claims 1-5, further comprising:
when adapting a plurality of SL DRX configurations, selecting one of the SL DRX configurations and/or one of values of SL DRX parameters for the SL DRX configurations.

7. The method of any of claims 1-6, wherein the SL DRX configuration is adapted only when guaranteed bit rate, GBR, PC5 bearers are configured between the first terminal device (500, 600, 1301) and a second terminal device (700, 800, 1302).

8. The method of any of claims 1-7, wherein the SL DRX configuration is adapted according to a first configured interval.

9. The method of any of claim 4 or any of claims 5-8 when depending on claim 4, wherein the SL DRX parameters for the SL DRX configuration are adjusted within a configured percent according a second configured interval.

10. The method of claims 7 and 8,
wherein when the GBR PC5 bearers are configured between the first terminal device (500, 600, 1301) and a second terminal device (700, 800, 1302), the first interval and/or the second interval is configured as smaller values and the percent is configured as a larger value, and
wherein when the GBR PC5 bearers are not configured between the first terminal device (500, 600, 1301) and a second terminal device (700, 800, 1302), the first interval and/or the second interval are configured as larger values and the percent is configured as a smaller value.

11. The method of any of claims 1-10, wherein parameters for the adaptation of the SL DRX configuration are configured by a control node (1100, 1200, 1303) or preconfigured.

12. The method of claim 11, wherein the control node (1100, 1200, 1303) node is a gNB, or a controlling terminal device, or a combination of the gNB and the controlling terminal device.

13. A first terminal device (500, 600), the first terminal device (500, 600) being adapted to:
adapt a sidelink discontinuous reception, SL DRX, configuration based on measured sidelink, SL, congestion **characterised by**:
extending active time of the first terminal device (500, 600, 1301) when the measured SL congestion is increasing; and
reducing the active time of the first terminal device (500, 600, 1301) when the measured SL congestion is decreasing,
wherein the active time is extended by applying a secondary DRX cycle during each existing DRX cycle when the measured SL congestion is above a first configured threshold, and the active time is reduced by disabling the secondary DRX cycle when the measured SL congestion is below a second configured threshold, or
wherein the active time is extended by applying a secondary timer during each existing DRX cycle when the measured SL congestion is above a first configured threshold, and the active time is reduced by disabling the secondary timer when the measured SL congestion is below a second configured threshold.

14. The first terminal device (500, 600) of claim 13, adapted to perform the method of any of claims 2-12.

15. A computer program which, when executed by a set of one or more processors of a first terminal device (500), causes the first terminal device (500) to perform operations of the method of any of claims 1-12.

## Patentansprüche

1. Verfahren (100), das von einer ersten Endgerätevorrichtung (500, 600, 1301) implementiert wird, wobei das Verfahren Folgendes umfasst:
Anpassen (101) einer Sidelink-Konfiguration diskontinuierlichen Empfangs, SL-DRX, basierend auf einer gemessenen Sidelink-Überlastung, SL-Überlastung, **gekennzeichnet durch**:
Verlängern einer aktiven Zeit der ersten Endgerätevorrichtung (500, 600, 1301), wenn die gemessene SL-Überlastung zunimmt; und
Verkürzen der aktiven Zeit der ersten Endgerätevorrichtung (500, 600, 1301), wenn die gemessene SL-Überlastung abnimmt,
wobei die aktive Zeit durch Anwenden eines sekundären DRX-Zyklus während jedes bestehenden DRX-Zyklus verlängert wird, wenn die gemessene SL-Überlastung über einem ersten konfigurierten Schwellenwert liegt, und die aktive Zeit durch Deaktivieren des sekundären DRX-Zyklus verkürzt wird, wenn die gemessene SL-Überlastung unter einem zweiten konfigurierten Schwellenwert liegt, oder
wobei die aktive Zeit durch Anwenden eines sekundären Zeitgebers während jedes bestehenden DRX-Zyklus verlängert wird, wenn die gemessene SL-Überlastung über einem ersten konfigurierten Schwellenwert liegt, und die aktive Zeit durch Deaktivieren des sekundären Zeitgebers verkürzt wird, wenn die gemessene SL-Überlastung unter einem zweiten konfigurierten Schwellenwert liegt.

2. Verfahren nach Anspruch 1, wobei die gemessene SL-Überlastung in einem Ressourcenpool gemessen wird.

3. Verfahren nach einem der Ansprüche 1 oder 2, wobei die SL-Überlastung in Bezug auf Metriken gemessen wird, die mindestens eines von Folgenden umfassen:
Paketverzögerung;
Paketverlustverhältnis;
Paketfehlerrate;
erreichte Bitrate eines Verkehrstyps;
Verhältniswert für belegten Kanal;
Kanalnutzungsverhältnis;
Referenzsignalempfangsleistung;
Referenzsignalempfangsqualität;
Empfangssignalstärkeanzeige;
Signal-zu-Interferenz-plus-Rausch-Verhältnis;
Signal-zu-Interferenz-Verhältnis;
Negativbestätigung hinsichtlich einer hybriden automatischen Wiederholungsanforderung, HARQ; und
durchschnittliche Anzahl von Neuübertragungen eines HARQ-Transportblocks.

4. Verfahren nach einem der Ansprüche 1 bis 3, wobei die aktive Zeit durch Anpassen von SL-DRX-Parametern für die SL-DRX-Konfiguration verlängert oder verkürzt wird.

5. Verfahren nach Anspruch 4, wobei die SL-DRX-Parameter mindestens eines von Folgenden umfassen:
drx-onDurationTimer;
drx-InactivityTimer;
drx-LongCycleStartOffset;
drx-ShortCycle; und
drx-ShortCycleTimer.

6. Verfahren nach einem der Ansprüche 1 bis 5, ferner umfassend:
bei Anpassung einer Mehrzahl von SL-DRX-Konfigurationen Auswählen einer der SL-DRX-Konfigurationen und/oder eines der Werte von SL-DRX-Parameters für die SL-DRX-Konfigurationen.

7. Verfahren nach einem der Ansprüche 1 bis 6, wobei die SL-DRX-Konfiguration nur dann angepasst wird, wenn PCS-Träger mit zugesicherter Bitrate, GBR, zwischen der ersten Endgerätevorrichtung (500, 600, 1301) und einer zweiten Endgerätevorrichtung (700, 800, 1302) konfiguriert sind.

8. Verfahren nach einem der Ansprüche 1 bis 7, wobei die SL-DRX-Konfiguration gemäß einem ersten konfigurierten Intervall angepasst wird.

9. Verfahren nach Anspruch 4 oder einem der Ansprüche 5 bis 8, wenn von Anspruch 4 abhängig, wobei die SL-DRX-Parameter für die SL-DRX-Konfiguration innerhalb eines konfigurierten Prozentsatzes gemäß einem zweiten konfigurierten Intervall angepasst werden.

10. Verfahren nach Anspruch 7 und 8,
wobei, wenn die GBR-PCS-Träger zwischen der ersten Endgerätevorrichtung (500, 600, 1301) und einer zweiten Endgerätevorrichtung (700, 800, 1302) konfiguriert sind, das erste Intervall und/oder das zweite Intervall als kleinere Werte konfiguriert sind und der Prozentsatz als ein größerer Wert konfiguriert ist, und
wobei, wenn die GBR-PCS-Träger nicht zwischen der ersten Endgerätevorrichtung (500, 600, 1301) und einer zweiten Endgerätevorrichtung (700, 800, 1302) konfiguriert sind, das erste Intervall und/oder das zweite Intervall als größere Werte konfiguriert sind und der Prozentsatz als ein kleinerer Wert konfiguriert ist.

11. Verfahren nach einem der Ansprüche 1 bis 10, wobei Parameter für die Anpassung der SL-DRX-Konfiguration von einem Steuerknoten (1100, 1200, 1303) konfiguriert werden oder vorkonfiguriert sind.

12. Verfahren nach Anspruch 11, wobei der Steuerknoten (1100, 1200, 1303) ein gNB oder eine steuernde Endgerätevorrichtung oder eine Kombination des gNB und der steuernden Endgerätevorrichtung ist.

13. Erste Endgerätevorrichtung (500, 600), wobei die erste Endgerätevorrichtung (500, 600) ausgelegt ist zum:
Anpassen einer Sidelink-Konfiguration diskontinuierlichen Empfangs, SL-DRX, basierend auf einer gemessenen Sidelink-Überlastung, SL-Überlastung, **gekennzeichnet durch**:
Verlängern einer aktiven Zeit der ersten Endgerätevorrichtung (500, 600, 1301), wenn die gemessene SL-Überlastung zunimmt; und
Verkürzen der aktiven Zeit der ersten Endgerätevorrichtung (500, 600, 1301), wenn die gemessene SL-Überlastung abnimmt,
wobei die aktive Zeit durch Anwenden eines sekundären DRX-Zyklus während jedes bestehenden DRX-Zyklus verlängert wird, wenn die gemessene SL-Überlastung über einem ersten konfigurierten Schwellenwert liegt, und die aktive Zeit durch Deaktivieren des sekundären DRX-Zyklus verkürzt wird, wenn die gemessene SL-Überlastung unter einem zweiten konfigurierten Schwellenwert liegt, oder
wobei die aktive Zeit durch Anwenden eines sekundären Zeitgebers während jedes bestehenden DRX-Zyklus verlängert wird, wenn die gemessene SL-Überlastung über einem ersten konfigurierten Schwellenwert liegt, und die aktive Zeit durch Deaktivieren des sekundären Zeitgebers verkürzt wird, wenn die gemessene SL-Überlastung unter einem zweiten konfigurierten Schwellenwert liegt.

14. Erste Endgerätevorrichtung (500, 600) nach Anspruch 13, ausgelegt zum Durchführen des Verfahrens nach einem der Ansprüche 2 bis 12.

15. Computerprogramm, das bei Ausführung durch einen Satz eines oder mehrerer Prozessoren einer ersten Endgerätevorrichtung (500) die erste Endgerätevorrichtung (500) zum Durchführen von Operationen des Verfahrens nach einem der Ansprüche 1 bis 12 veranlasst.

## Revendications

1. Procédé (100) mis en œuvre par un premier dispositif terminal (500, 600, 1301), le procédé comprenant :
l'adaptation (101) d'une configuration de réception discontinue de liaison latérale, SL DRX, sur la base d'un encombrement de liaison latérale, SL, mesuré, **caractérisé par** :
l'accroissement d'un temps d'activité du premier dispositif terminal (500, 600, 1301) lorsque l'encombrement SL mesuré augmente ; et
la réduction du temps d'activité du premier dispositif terminal (500, 600, 1301) lorsque l'encombrement SL mesuré diminue,
dans lequel le temps d'activité est accru par l'application d'un cycle DRX secondaire au cours de chaque cycle DRX existant lorsque l'encombrement SL mesuré est supérieur à un premier seuil configuré, et le temps d'activité est réduit par la désactivation du cycle DRX secondaire lorsque l'encombrement SL mesuré est inférieur à un deuxième seuil configuré, ou
dans lequel le temps d'activité est accru par l'application d'une temporisation secondaire au cours de chaque cycle DRX existant lorsque l'encombrement SL mesuré est supérieur à un premier seuil configuré, et le temps d'activité est réduit par la désactivation de la temporisation secondaire lorsque l'encombrement SL mesuré est inférieur à un deuxième seuil configuré.

2. Procédé selon la revendication 1, dans lequel l'encombrement SL mesuré est mesuré dans un groupe de ressources.

3. Procédé selon la revendication 1 ou 2, dans lequel l'encombrement SL est mesuré en termes de métriques comprenant au moins l'un parmi :
un retard de paquets ;
un rapport de perte de paquets ;
un taux d'erreur de paquets ;
un débit binaire atteint d'un type de trafic ;
un rapport de canal occupé ;
un rapport d'utilisation de canal ;
une puissance de réception de signal de référence ;
une qualité de réception de signal de référence ;
une indication de force de signal reçu ;
un rapport de signal sur interférence plus bruit ;
un rapport de signal sur interférence ;
un accusé de réception négatif de demande de répétition automatique hybride, HARQ ; et
un nombre moyen de retransmissions d'un bloc de transport HARQ.

4. Procédé selon l'une quelconque des revendications 1 à 3, dans lequel le temps d'activité est accru ou réduit par l'ajustement de paramètres SL DRX pour la configuration SL DRX.

5. Procédé selon la revendication 4, dans lequel les paramètres SL DRX comprennent au moins l'un parmi :
drx-onDurationTimer ;
drx-InactivityTimer ;
drx-LongCycleStartOffset ;
drx-ShortCycle ; et
drx-ShortCycleTimer.

6. Procédé selon l'une quelconque des revendications 1 à 5, comprenant en outre :
lors de l'adaptation d'une pluralité de configurations SL DRX, la sélection de l'une des configurations SL DRX et/ou de l'une de valeurs de paramètres SL DRX pour les configurations SL DRX.

7. Procédé selon l'une quelconque des revendications 1 à 6, dans lequel la configuration SL DRX est adaptée uniquement lorsque des supports PC5 à débit binaire garanti, GBR, sont configurés entre le premier dispositif terminal (500, 600, 1301) et un deuxième dispositif terminal (700, 800, 1302).

8. Procédé selon l'une quelconque des revendications 1 à 7, dans lequel la configuration SL DRX est adaptée en fonction d'un premier intervalle configuré.

9. Procédé selon la revendication 4 ou l'une quelconque des revendications 5 à 8 dépendant de la revendication 4, dans lequel les paramètres SL DRX pour la configuration SL DRX sont ajustés à un pourcentage configuré en fonction d'un deuxième intervalle configuré.

10. Procédé selon les revendications 7 et 8,
dans lequel, lorsque les supports PC5 GBR sont configurés entre le premier dispositif terminal (500, 600, 1301) et un deuxième dispositif terminal (700, 800, 1302), le premier intervalle et/ou le deuxième intervalle sont configurés avec des valeurs plus petites et le pourcentage est configuré avec une valeur plus grande, et
dans lequel, lorsque les supports PC5 GBR ne sont pas configurés entre le premier dispositif terminal (500, 600, 1301) et un deuxième dispositif terminal (700, 800, 1302), le premier intervalle et/ou le deuxième intervalle sont configurés avec des valeurs plus grandes et le pourcentage est configuré avec une valeur plus petite.

11. Procédé selon l'une quelconque des revendications 1 à 10, dans lequel des paramètres pour l'adaptation de la configuration SL DRX sont configurés par un noeud de commande (1100, 1200, 1303) ou préconfigurés.

12. Procédé selon la revendication 11, dans lequel le noeud de commande (1100, 1200, 1303) est un gNB ou un dispositif terminal de commande ou une combinaison du gNB et du dispositif terminal de commande.

13. Premier dispositif terminal (500, 600), le premier dispositif terminal (500, 600) étant adapté pour :
adapter une configuration de réception discontinue de liaison latérale, SL DRX, sur la base d'un encombrement de liaison latérale, SL, mesuré, **caractérisé par** :
l'accroissement d'un temps d'activité du premier dispositif terminal (500, 600, 1301) lorsque l'encombrement SL mesuré augmente ; et
la réduction du temps d'activité du premier dispositif terminal (500, 600, 1301) lorsque l'encombrement SL mesuré diminue,
dans lequel le temps d'activité est accru par l'application d'un cycle DRX secondaire au cours de chaque cycle DRX existant lorsque l'encombrement SL mesuré est supérieur à un premier seuil configuré, et le temps d'activité est réduit par la désactivation du cycle DRX secondaire lorsque l'encombrement SL mesuré est inférieur à un deuxième seuil configuré, ou
dans lequel le temps d'activité est accru par l'application d'une temporisation secondaire au cours de chaque cycle DRX existant lorsque l'encombrement SL mesuré est supérieur à un premier seuil configuré, et le temps d'activité est réduit par la désactivation de la temporisation secondaire lorsque l'encombrement SL mesuré est inférieur à un deuxième seuil configuré.

14. Premier dispositif terminal (500, 600) selon la revendication 13, adapté pour réaliser le procédé selon l'une quelconque des revendications 2 à 12.

15. Programme informatique qui, lorsqu'il est exécuté par un ensemble d'un ou plusieurs processeurs d'un premier dispositif terminal (500), amène le premier dispositif terminal (500) à réaliser des opérations du procédé selon l'une quelconque des revendications 1 à 12.
